# EUROPÄISCHE PATENTSCHRIFT

(11) **EP 0 633 984 B1**
(45) Veröffentlichungstag und Bekanntmachung des Hinweises auf die Patenterteilung: **09.10.1996**
(21) Anmeldenummer: 93905205.6
(22) Anmeldetag: 20.03.1993
(51) Int. Cl.: F16C 17/20, F16C 32/04

(54) **HILFSLAGERSYSTEM FÜR EINEN AM STATOR SCHWEBEND GELAGERTEN ROTOR**
AUXILIARY BEARING SYSTEM FOR A ROTOR FLOATING-MOUNTED ON A STATOR
SYSTEME DE PALIER AUXILIAIRE POUR UN ROTOR MONTE FLOTTANT SUR UN STATOR

(30) Priorität: 27.03.1992 DE 4210042
(43) Veröffentlichungstag der Anmeldung: 18.01.1995
(73) Patentinhaber: FORSCHUNGSZENTRUM JÜLICH GMBH, 52425 Jülich (DE)
(72) Erfinder: FREMEREY, Johan, K., D-5300 Bonn 1 (DE); RÄBIGER, Jürgen, D-5160 Düren (DE)
(86) Internationale Anmeldenummer: DE9300252
(87) Internationale Veröffentlichungsnummer: WO9320362

(56) Entgegenhaltungen:
- EP-A- 0 299 854
- DE-A- 2 741 062
- FR-A- 2 127 543
- FR-A- 2 246 756
- US-A- 5 021 697

## Beschreibung

Die Erfindung bezieht sich auf ein Hilfslagersystem für einen Rotor, der am Stator schwebend, insbesondere durch Erzeugen eines Magnetfeldes zwischen Stator und Rotor berührungslos abgestützt ist. Das Hilfslagersystem besteht aus mechanischen Hilfslagerelementen, die mit geringem Abstand vom Rotor am Stator befestigt sind und im Falle radialen Ausbrechens des Rotors wirksam werden.

Hilfslagersysteme für berührungslos gelagerte Rotoren sind erforderlich, um Fehlfunktionen, insbesondere bei überhöhter radialer Kraftbeanspruchung des Rotors abzufangen. Die Hilfslager, die Wälz- und/oder Gleitlagerelemente aufweisen, sind am Stator derart angeordnet, daß der Rotor im Normalbetrieb seine berührungslose Lage beibehält und lediglich bei einer nicht zulässigen radialen Auslenkung vom Hilfslagersystem abgestützt wird.

Der Auslegung des Hilfslagersystems kommt wegen der Belastung der Hilfslagerelemente im Falle ihres Eingriffs erhebliche Bedeutung zu, vgl. z.B. Zeitschrift "Magnetic Bearing Insights", Vol. 1, No. 4, November 1991, Seiten 8 - 10. Die Belastung der Hilfslagerelemente entsteht durch die infolge der Reibung zwischen Rotor und Hilfslagerelemten verursachte und progressiv mit den radialen Auflagekräften anwachsende Präzisions-Gegenlaufbewegung, die zur Zerstörung des Rotors und in ungünstigen Fällen auch zur Zerstörung der Rotorumgebung infolge überhöhter Durchbiegung des Rotors führen kann.

In Kenntnis dieses Sachverhaltes sind schon Hilfslagerkonstruktionen vorgeschlagen worden, die der Anregung der Präzisionsbewegung entgegenwirken. Aus DE-A-27 41 062 ist es bekannt, die Rotorwelle nicht wie üblich mit einem die Rotorwelle umschließenden Hilfslagerelement abzustützen (Außenabstützung), sondern den Rotor bei einer unerwünschten radialen Auslenkung über ein in eine axiale Bohrung in die Rotorwelle eingeführtes Hilfslagerelement abzufangen (Innenabstützung). In beiden Fällen tritt bei Berührungskontakt mit einem Hilfslagerelement eine tangentiale Reibungskraft im Hilfslager auf, die den Rotor aufgrund gyroskopischer Gesetzmäßigkeit (Kreiselkräfte) radial nach außen treibt. Infolge dieser Kräfte zieht sich der Rotor im Falle der Außenabstützung im Hilfslager progressiv fest, denn mit zunehmender Auflagekraft wachsen die Kreiselkräfte. Bei einer Innenabstützung ergibt sich durch den nach außen strebenden Rotor im Gegensatz dazu jedoch eine Entlastung des Hilfslagersystems, der Rotor hat die Tendenz, sich von der Kontaktfläche im Hilfslagerelement abzuheben. Dies ist der prinzipielle Vorteil bei einer Innenabstützung.

Diesem Vorteil der Innenabstützung steht allerdings der Nachteil gegenüber, daß auf den Rotor durch die Kontaktreibung im Hilfslagerelement ein Drehmoment in der Weise übertragen wird, daß der Rotor im Rotordrehsinn um das abstützende Hilfslagerelement herumgeschleudert werden kann und sich aus einer dabei verursachten "Gleichlaufbewegung" nicht mehr befreit. Dies ist insbesondere dann gegeben, wenn die Rotorfrequenz eine Gleichlaufresonanz des Hilfslagersystems durchläuft.

Während also die Außenabstützung gegenlaufanregend und damit gleichlaufdämpfend wirkt, hat die Innenabstützung den gegenteiligen Effekt. Zu unerwünschten Bewegungszuständen des Rotors führen jedoch beide Abstützungsarten.

Aufgabe der Erfindung ist es, die Vorteile der Innenabstützung mit denen der Außenabstützung in wirksamer Weise zu verbinden.

Diese Aufgabe wird bei einem Hilfslagersystem der eingangs angegebenen Art gemäß der Erfindung durch die in Patentanspruch 1 angeführten Merkmale gelöst. Danach werden zur Abstützung des Rotors Lagerelemente eingesetzt, die zumindest sowohl eine Kontaktfläche zur Außenabstützung als auch eine zur Innenabstützung des Rotors zu Verfügung stellen, wobei die beiden Kontaktflächen nacheinander mit zunehmender radialer Auslenkung des Rotors vom Rotor kontaktiert werden und zumindest das bei einer Rotorauslenkung zuerst in Berührungskontakt kommende Lagerelement radial elastisch montiert ist.

Bevorzugt werden die Lagerelemente am Stator derart angeordnet, daß als erstes das Lagerelement für die Außenabstützung in Berührungskontakt kommt, Patentanspruch 2. In diesem Falle wird der Rotor an der Kontaktfläche radial nach außen gedrängt, wobei das zugehörige Lagerelement elastisch nachgibt, bis der Rotor auf der der Kontaktfläche diametral entgegengesetzten Rotorseite mit dem Lagerelement zur Innenabstützung in Berührung kommt und durch eine am Rotor in entgegengesetzter Richtung angreifende Kraft am weiteren Ausbrechen gehindert wird.

In weiterer Ausbildung der Erfindung sind nach Patentanspruch 3 die Lagerelemente zur Außen- und Innenabstützung konzentrisch zur Rotorachse angeordnet und überlappen sich in axialer Richtung. Die bei Berührung der Lagerelemente auftretenden Kräfte wirken so auf den Rotor im wesentlichen drehmomentenfrei. Bevorzugt umschließt das zur Innenabstützung vorgesehene Lagerelement das Lagerelement zur Außenabstützung, Patentanspruch 4. Zweckmäßig ist zur Ausbildung einer Kontaktfläche für zumindest eines der Lagerelemente ein Gleitring vorgesehen, Patentanspruch 5.

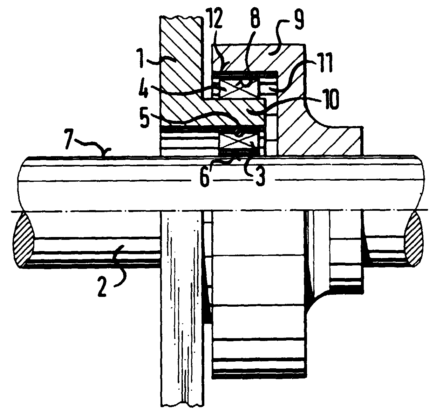

Die Erfindung wird nachfolgend anhand eines in der Zeichnung wiedergegebenen Ausführungsbeispieles näher erläutert.

Die Zeichnung zeigt ein Hilfslagersystem für einen am Stator 1 berührungslos gelagerten Rotor 2 mit zwei am Stator 1 befestigten mechanischen Hilfslagerelementen 3, 4, wobei das Hilfslagerelement 3 zur Außenabstützung, das Hilfslagerelement 4 zur Innenabstützung des Rotors dient. Das Hilfslagerelement 3 ist am Stator 1 mittels eines zwischen Hilfslagerelement und Stator angeordneten elastischen Ringes 5, im Ausführungsbeispiel mittels eines Gummiringes elastisch befestigt. Eine Kontaktfläche 6 des Hilfslagerelement 3 zur Auflage des Rotors bei einer radialen Auslenkung ist nach innen zur äußeren zylindrischen Rotoroberfläche 7 hin gerichtet. Das Hilfslagerelement 3 ist am Stator 1 derart angeordnet, daß es bei einer radialen Auslenkung des Rotors vor dem Hilfslagerelement 4 in Berührungskontakt kommt.

Das Hilfslagerelement 4 stützt den Rotor 2 über eine nach außen gerichtete Kontaktfläche 8 des Hilfslagerelements 4 ab. Bei einer radialen Auslenkung des Rotors 2 legt sich an der Kontaktfläche 8 ein am Rotor 2 befestigter Rotorring 9 an.

Das Hilfslagerelement 4 ist auf einer Hülse 10 des Stators 1 montiert und greift in eine Ausnehmung 11 des Rotorringes 9 derart ein, daß die Kontaktfläche 8 bei einer Auslenkung des Rotors 2 mit einer Innenfläche 12 der Ausnehmung 11 kontaktiert wird. Das Hilfslagerelement 4 ist am Stator 1 derart angeordnet, daß sein Kontakt zur Innenabstützung des Rotors bei einer radialen Auslenkung erst nach dem Hilfslagerelement 3 erfolgt. Innenfläche 12 und Kontaktfläche 8 des Hilfslagerelementes 4 sind im Ausführungsbeispiel als Gleitlagerteile ausgebildet.

Die Hilfslagerelemente 3, 4 sind am Stator 1 konzentrisch und derart angeordnet, daß sie sich in axialer Richtung überlappen. Das Lagerelement 4 zur Innenabstützung umschließt dabei das Lagerelement 3 zur Außenabstützung.

Bei einer übermäßigen radialen Auslenkung des Rotors 2 kommt im Ausführungsbeispiel zunächst das Hilfslagerelement 3 zur Außenabstützung des Rotors zum Eingriff. Der Rotor wird dabei an der Kontaktfläche 6 weiter nach außen gedrückt, so daß unter'elastischem Nachgeben des Hilfslagerelementes 3 sich nun Rotorring 9 und Kontaktfläche 8 des Lagerelementes 4 berühren. Die Berührungsebene auf der Kontaktfläche 8 liegt auf der diametral zum ersten Kontakt des Rotors im Lagerelement 3 entgegengesetzten Rotorseite. Die sich dadurch infolge der Innenabstützung des Rotors aufbauende Kraft wirkt auf den Rotor in entgegengesetzter Richtung zur Kraft im Hilfslagerelement 3 und entlastet das Hilfslagersystem.

Abweichend vom wiedergegebenen Ausführungsbeispiel lassen sich die Hilfslagerelemente 3 und 4 auch ohne, daß sie sich überlappen, an anderen Stellen am Stator 1 anbringen.

## Patentansprüche

1. Hilfslagersystem für einen Rotor (2), der am Stator (1) schwebend, insbesondere durch Erzeugen eines Magnetfeldes zwischen Stator und Rotor berührungslos abgestützt ist, bestehend aus mechanischen Hilfslagerelementen (3, 4), die mit geringem Abstand vom Rotor (2) am Stator (1) befestigt sind und im Falle radialen Ausbrechens des Rotors wirksam werden,
**dadurch gekennzeichnet**,
daß die Hilfslagerelemente (3, 4) zumindest einerseits eine Kontaktfläche (6) zur Außenabstützung des Rotors (2) und andererseits eine Kontaktfläche (8) zur Innenabstützung des Rotors (2) zur Verfügung stellen, wobei die beiden Kontaktflächen (6, 8) nacheinander mit zunehmender radialer Auslenkung des Rotors (2) mit dem Rotor in Berührung kommen, und daß zumindest das bei einer Rotorauslenkung zuerst in Berührungskontakt kommende Lagerelement (3) radial elastisch montiert ist.

2. Hilfslagersystem nach Anspruch 1,
**dadurch gekennzeichnet**,
daß das Lagerelement (3) zur Außenabstützung des Rotors (2) zuerst in Berührungskontakt kommt.

3. Hilfslagersystem nach Anspruch 1 oder 2,
**dadurch gekennzeichnet**,
daß die beiden Kontaktflächen (6, 8) konzentrisch zur Rotorachse und am Stator (1) in axialer Richtung sich überlappend angeordnet sind.

4. Hilfslagersystem nach einem der Ansprüche 1, 2 oder 3,
**dadurch gekennzeichnet**,
daß die Kontaktfläche (8) zur Innenabstützung die Kontaktfläche (6) zur Außenabstützung umschließt.

5. Hilfslagersystem nach einem der vorhergehenden Ansprüche,
**dadurch gekennzeichnet**,
daß zur Ausbildung zumindest einer der Kontaktflächen (8) ein Gleitring eingesetzt ist.

## Claims

1. An auxiliary bearing system for a rotor (2) which is supported floating on the stator (1), particularly by the generation of a magnetic field between the stator and the rotor, without contact, consisting of mechanical auxiliary bearing elements (3, 4) which are fixed to the stator (1) at a short distance from the rotor (2) and which become effective in the event of a radial migration of the rotor,
characterised in that
the auxiliary rotor elements (3, 4) have a contact face (6) on at least one side for the external support of the rotor (2) and have a contact face (8) on the other side for the internal support of the rotor (2), wherein the two contact faces (6, 8) come into contact successively with the rotor with increasing radial excursion of the rotor (2), and that at least the bearing element (3) which first comes into contact on an excursion of the rotor is radially elastically mounted.

2. An auxiliary bearing system according to claim 1,
characterised in that
the bearing element (3) for the external support of the rotor (2) comes into contact first.

3. An auxiliary bearing system according to claim 1 or 2,
characterised in that
the two contact faces (6, 8) are disposed concentrically with the rotor axis and overlapping in the axial direction on the stator (1).

4. An auxiliary bearing system according to any one of claims 1, 2 or 3,
characterised in that
the contact face (8) for internal support surrounds the contact face (6) for external support.

5. An auxiliary bearing system according to any one of the preceding claims,
characterised in that
a sliding ring is used for the construction of at least one of the contact faces (8).

## Revendications

1. Système de palier auxiliaire pour un rotor (2), qui est supporté sans contact et à l'état flottant sur le stator (1), notamment sous l'effet de la production d'un champ magnétique entre le stator et le rotor, et constitué par des éléments mécaniques de palier auxiliaire (3,4), qui sont fixés sur le stator (1) à une faible distance du rotor (2) et agissent dans le cas d'un éclatement radial du rotor,
caractérisé en ce que les éléments de palier auxiliaire (3,4) disposent au moins d'une part d'une surface de contact (6) servant à supporter extérieurement le rotor (2) et d'autre part d'une surface de contact (8) servant à réaliser le soutien intérieur du rotor (2), les deux surfaces de contact (6,8) venant successivement en contact avec le rotor lors d'une déviation radiale croissante du rotor (2), et qu'au moins l'élément de palier (3), qui établit tout d'abord le contact lors d'une déviation du rotor, est monté radialement de façon élastique.

2. Système de palier auxiliaire selon la revendication 1, caractérisé en ce que l'élément de palier (3) servant à réaliser le soutien extérieur du rotor (2) établit le contact en premier.

3. Système de palier auxiliaire selon la revendication 1 ou 2, caractérisé en ce que les deux surfaces de contact (6,8) sont disposées concentriquement par rapport à l'axe du rotor et en chevauchement au niveau du stator (1), dans une direction axiale.

4. Système de palier auxiliaire selon l'une des revendications 1, 2 ou 3, caractérisé en ce que la surface de contact (8) prévue pour le soutien intérieur enserre la surface de contact (6) prévue pour le soutien extérieur.

5. Système de palier auxiliaire selon l'une des revendications précédentes, caractérisé en ce qu'on utilise un palier lisse pour former au moins l'une des surfaces de contact (8).
